# EUROPEAN PATENT APPLICATION

(11) **EP 2 518 590 A1**
(43) Date of publication of application: **31.10.2012**
(21) Application number: 11164097.5
(22) Date of filing: 28.04.2011
(51) Int. Cl.: G06F 3/01, G06F 1/16

(54) **Portable electronic device and method of controlling same**

(71) Applicant: Research In Motion Limited, Waterloo, ON N2L 3W8 (CA)
(72) Inventor: DeLuca, Michael Joseph, Rolling Meadows, Illinois 60008 (US); Winger, Lyall Kenneth, Waterloo Ontario N2L 3W8 (CA); Hirsch, Alexander Samson, Rolling Meadows, Illinois 60008 (US)
(74) Representative: Roberts, Gwilym Vaughan

(57) **Abstract**

A method includes displaying a projected image from a display of a portable electronic device, detecting an object near the portable electronic device, and when the object is associated with the projected image, actuating an actuator to provide tactile feedback.

## Description

### FIELD OF TECHNOLOGY

The present disclosure relates to portable electronic devices having displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, tablet computers, and laptop computers with wireless 702.11 or Bluetooth capabilities.

Portable electronic devices such as PDAs, or tablet computers are generally intended for handheld use and ease of portability. Smaller devices are generally desirable for portability. A touch-sensitive display, also known as a touchscreen display, is useful on handheld devices, which are small and have limited space for user input and output. The information displayed on the touch-sensitive displays may be modified depending on the functions and operations being performed. Improvements in portable electronic devices are desirable.

### SUMMARY

A method includes displaying a projected image from a display of a portable electronic device, detecting an object near the portable electronic device, and when the object is associated with the projected image, actuating an actuator to provide tactile feedback. A portable electronic device includes a display to project an image in a region spaced from the portable electronic device, an object detector to detect an object in the region spaced from the portable electronic device, an actuator actuatable to provide tactile feedback, and a processor coupled to the display, the detector, and the actuator, to actuate the actuator in response to detection of the object in the region spaced from the portable electronic device.

### BRIEF DESCRIPTION OF THE DRAWINGS

FIG. 1 is a block diagram of a portable electronic device in accordance with the disclosure.

FIG. 2 is a block diagram illustrating an actuator of the portable electronic device in accordance with the disclosure.

FIG. 3 illustrates a stereoscopic image projected from the portable electronic device and an object associated with a selectable feature of the image in accordance with the disclosure.

FIG. 4 is a flowchart illustrating a method of controlling the portable electronic device to provide tactile feedback in accordance with the disclosure.

FIG. 5 is a block diagram illustrating a plurality of actuators of an alternative portable electronic device in accordance with the disclosure.

### DETAILED DESCRIPTION

The following describes an electronic device and a method that includes displaying a projected image from a display of a portable electronic device, detecting an object near the portable electronic device, and when the object is associated with the projected image, actuating an actuator to provide tactile feedback.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, tablet computers, mobile internet devices, and so forth. The portable electronic device may also be a portable electronic device without wireless communication capabilities, such as handheld electronic games, digital photograph albums, digital cameras, media players, e-book readers, and so forth.

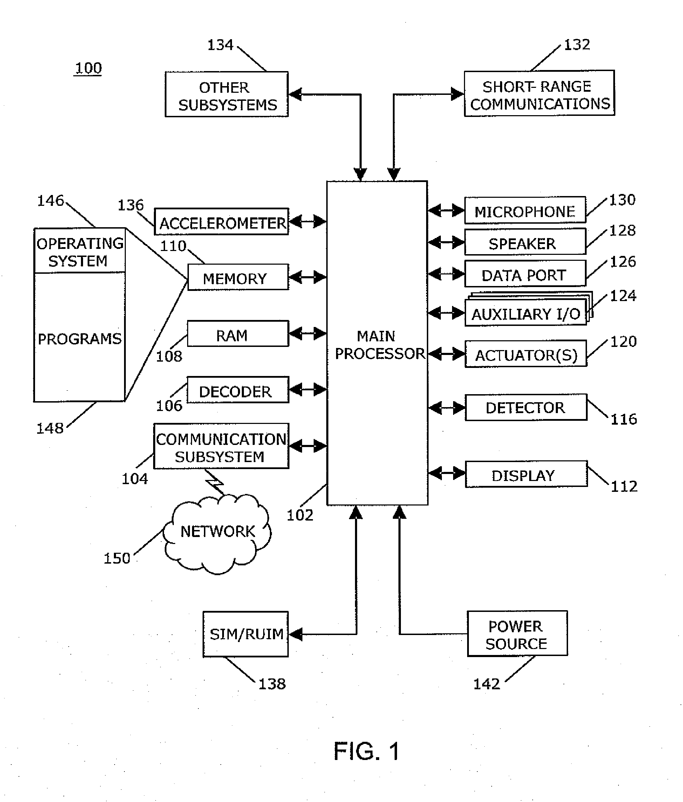

A block diagram of an example of a portable electronic device 100 is shown in FIG. 1. The portable electronic device 100 includes multiple components, such as a processor 102 that controls the overall operation of the portable electronic device 100. Optional communication functions, including data and voice communications, may be performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112, an object detector 116, one or more actuators 120, an auxiliary input/output (I/O) subsystem 124, a data port 126, a speaker 128, a microphone 130, short-range communications 132, and other device subsystems 134.

The stereoscopic display 112 may be utilized to project a three-dimensional image in a region that is spaced from the portable electronic device 100 via the processor 102. The three-dimensional image may include information, such as text, characters, symbols, images, icons, and other items that may be displayed. User-interaction with a graphical user interface that includes the three-dimensional image, is performed through the detector 116. The detector 116 is operable to determine the position of an object near or in the region in which the image appears to a user such that movement of an object which is spaced from the display 112 may be detected. The object may include, for example, a finger, thumb, appendage, stylus, pen, or other pointer or detectable item.

The processor 102 may also interact with an orientation sensor such as an accelerometer 136 that may be utilized to detect direction of gravitational forces or gravity-induced reaction forces.

To identify a subscriber for network access, the portable electronic device 100 may use a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The display 112 may be a stereoscopic display operable to provide a different image to each eye to cause the user to perceive a three-dimensional image that is spaced from the portable electronic device 100. Suitable stereoscopic displays may utilize active shutter technology, for example, utilizing liquid crystal glasses to block or pass light through in synchronization with images from the display 112. Alternatively, suitable stereoscopic displays may utilize passive technology, for example, utilizing linearly or circularly polarized glasses, or utilizing glasses-free lenticular technology. Images displayed utilizing the stereoscopic display are perceived to be located in a region in three-dimensional space in front of or behind the display.

The detector 116 may be any suitable detector to detect the presence of objects in the region in front of the display 112 in which the images are projected by the display 112. The detector 116 may include, for example video-based detection, utilizing, for example video cameras and triangulation methods to detect objects in the region. Alternatively, the detector 116 may include acoustic detection in which, for example, transducers are utilized to provide acoustic detection of an object in the region.

A contactless location, or contactless object location, is a location at which the object is detected and is not in contact with the electronic device 100, referred to herein as spaced from the electronic device 100. Contactless object movement is an object movement during which the object is not in contact with the portable electronic device 100. A contactless gesture is based on contactless object movement. For example, a contactless gesture may include contactless object movement in front of the display 112 of the device 100 without making contact with the display 112.

The detector 116 may be utilized to detect the contactless location of an object, contactless movement of the object, or a contactless gesture that is in the region in which images are projected by the display 112. Location data may include a volume, an area, or a single point, such as a point at or near a center of an area. A signal is provided to the processor 102 in response to detection of an object.

Contactless object movement may also be detected and may be identified by location and direction, for example. One or more contactless gestures may be detected. A contactless gesture may be identified by a start location, an end location, the distance travelled, the duration, and the direction, for example. A contactless gesture may be long or short in distance and/or duration. Two points of the contactless gesture may be utilized to determine a direction.

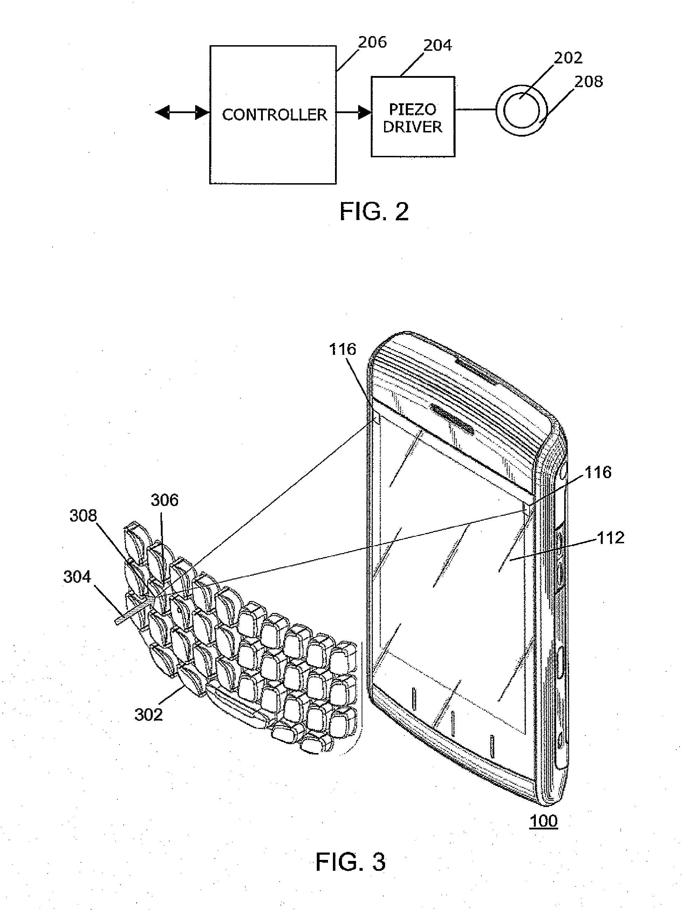

An example of an actuator is illustrated in FIG. 2. The actuator may comprise, for example, a piezoelectric device or element 202 such as a piezoelectric disc fastened to a substrate 208, for example, by adhesive, lamination, laser welding, and/or by other suitable fastening method or device. The piezoelectric material may be lead zirconate titanate or any other suitable material. Although the piezo element 202 is a ceramic disk in this example, the piezoelectric material may have any suitable shape and geometrical features, for example a non-constant thickness, chosen to meet desired specifications.

The substrate 208, which may also be referred to as a shim, may be comprised of a metal, such as nickel, or any other suitable material such as, for example, stainless steel, brass, and so forth. The substrate 208 bends when the piezo element 202 contracts diametrically, as a result of build up of charge at the piezo element 202.

The piezo actuator 120 may be controlled to provide tactile feedback. For example, the piezoelectric element 202 may be controlled by a piezo driver 204 in communication with a controller 206 that also communicates with the processor 102 of the portable electronic device 100. The processor 102 may send signals to the controller 206 to control actuation of the piezo actuator 120. The controller 206 controls the piezo driver 204 that controls the current/voltage to the piezoelectric element 202. The piezo actuator 120 may be disposed in a housing of the portable electronic device 100 such that the piezo actuator 120 imparts a force on the housing or other suitable portion or component of the portable electronic device 100. Tactile feedback may be provided to a user by controlling the piezo actuator 120. For example, the voltage/charge at the piezoelectric element 202 may be modified such that the piezo actuator 120 imparts a force on the housing, which force may, for example, provide a click feel or sensation, a vibration, or any other suitable tactile feedback.

Alternatively, the actuator may comprise a vibration motor, for example, controlled by the processor 102, to provide tactile feedback, for example, to the housing of the portable electronic device 100. Other suitable actuators may be utilized to provide tactile feedback.

FIG. 3 illustrates a perspective view of an example of a three-dimensional stereoscopic image projected by the display 112 of the portable electronic device 100 and an object interacting with the image. The example stereoscopic image illustrated in FIG. 2 is a keyboard 302. The keyboard 302 is one example of a stereoscopic image that includes selectable features. Other stereoscopic images may be displayed including images that include selectable icons and other buttons or keys. In the example illustrated in FIG. 3, the keyboard 302 includes a plurality of selectable keys. Each of the keys is selectable by movement of an object to a location that is associated with the key. An object is detected, utilizing the detector 116, at a location associated with a key when the object is at a location at which the key appears. For example, a user may move his or her finger to a location that corresponds with the location at which the key appears to be displayed from the display 112, when the finger is detected.

The position of the stereoscopic image in three-dimensional space is dependent on factors such as the distance between the eyes of the user, and the position of the user relative to the display 112. Calibration procedures may be utilized to determine a position of a stereoscopic image. Pattern recognition and/or proximity detection may also be utilized to determine the position of the user relative to the display 112. Alternatively, utilizing glasses-free lenticular display technology may facilitate at least partial predetermination of the position of the stereoscopic image in three-dimensional space in front of the display 112 because the location of the user and the distance between the display 112 and the user may be substantially predetermined by approximating an average distance for a handheld device application.

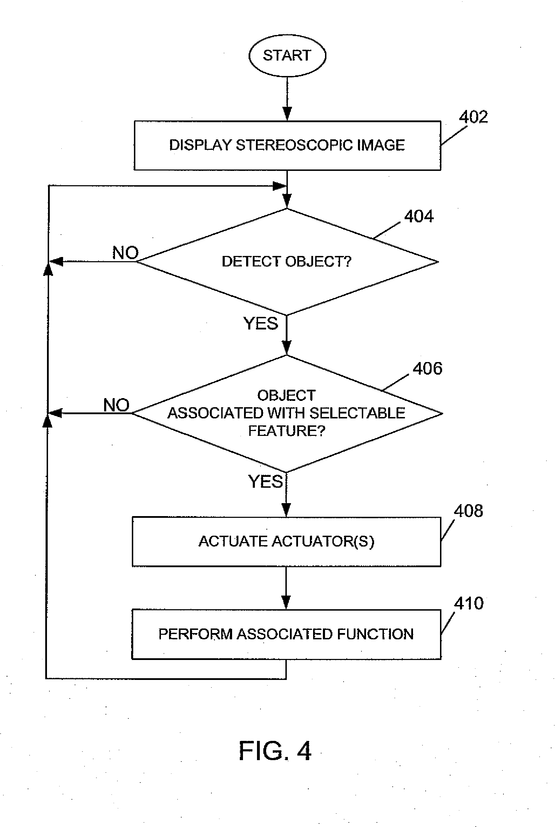

A flowchart illustrating a method of controlling an electronic device, such as the portable electronic device 100, is shown in FIG. 4. The method may be carried out by software executed, for example, by the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium.

A stereoscopic image is displayed 402. The image includes one or more selectable features. An object is detected 404 at a contactless location utilizing the detector 116. Detection of the object includes determination of the object location relative to the portable electronic device 100. When an object is detected 404, the process continues at 406. When the object is associated with a selectable feature displayed in the stereoscopic image at 406, the process continues at 408. An object may be associated with a selectable feature when the object is located on the image of the selectable feature, or when the object location and the image intersect. Alternatively, the object may be associated with the selectable feature when movement of the object is detected, from a location that appears to be on the image of the selectable feature, toward the display 112, for example, to depress the virtual key or button. The display 112 may be controlled by the processor 102 to change the image such that the key or button appears to be depressed during the movement of the object. In response to determining that the object is associated with the selectable feature, the actuator 120 is actuated 408 to provide tactile feedback. A function associated with the selectable feature is performed at 410. The function may be, for example, adding a letter to displayed text when the selectable feature is a key of a keyboard, launching an application and displaying another image or screen when the feature is an icon or other application identifier, or any other suitable function.

In the example of FIG. 3, the image of the keyboard including selectable keys is displayed. An object, such as a finger, is illustrated by the arrow 304 and the end 306 of the arrow 304 illustrates the end of the object. The object is detected and the object is associated with the key 308 of the keyboard because the end of the object is located on the image of the key 308. Thus, the image location and the object location intersect. The actuator 120 is actuated such that the portable electronic device 100 provides tactile feedback to the user.

A user holding the portable electronic device 100, for example, with one hand may select displayed features with the other hand. The hand utilized to select may select the feature without contacting the portable electronic device 100. Tactile feedback is provided and sensed by the user through the hand holding the portable electronic device 100, rather than through the hand utilized to select the feature.

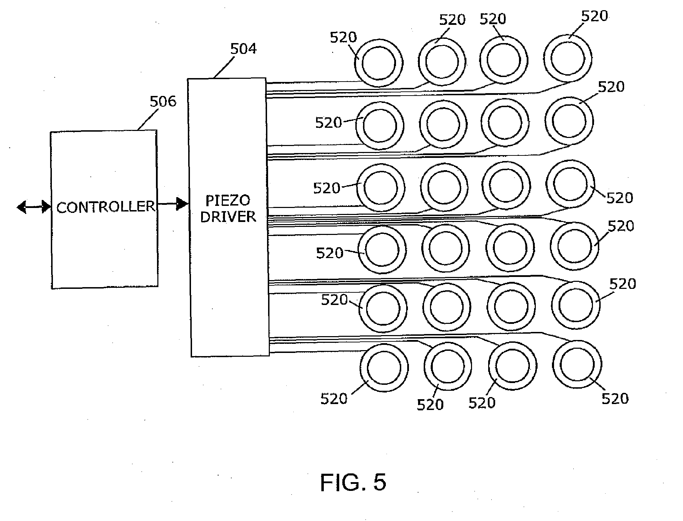

Optionally, a plurality of actuators may be utilized to provide tactile feedback. An example of a plurality of actuators is illustrated in FIG. 5 in which a plurality of piezo actuators 520 is controlled to provide tactile feedback. In the example illustrated in FIG. 5, 24 piezo actuators 520 may be controlled by a piezo driver 504 in communication with a controller 506 that also communicates with the processor of the portable electronic device. The processor may send signals to the controller 506 to control actuation of the piezo actuators 520. The controller 506 controls the piezo driver 504 that controls the current/voltage to the piezo actuators 520.

The piezo actuators 520 may be controlled individually via a separate control line between each actuator and the controller 502, as illustrated in FIG. 5. Different signals may be sent to each different actuator.

The piezo actuators 520 may be suspended or disposed on a suitable support for supporting the piezo actuators 520 while permitting flexing of the piezo actuators 520. The piezo actuators 520 may be disposed in a housing of the portable electronic device 100 such that each piezo actuator 504, when actuated, imparts a force at a different location on the back of the housing or other suitable portion or component of the portable electronic device. Tactile feedback may be provided at different locations on the housing of the portable electronic device by controlling the piezo actuators 520. For example, the piezo actuators may be disposed in the housing to provide tactile feedback at one or more of 6 locations on the back of the portable electronic device.

When an object is associated with a selectable feature at 406, an associated actuator 520 is identified and actuated at 408 to provide tactile feedback. An actuator 520 may be associated with a selectable feature based on location of the selectable feature. For example, when a selectable feature at an upper right side of the displayed image is selected, the actuator 520 at an upper right side of the portable electronic device may be actuated. When a selectable feature at a lower left side of the displayed image is selected, the actuator 520 at a lower left side of the portable electronic device may be actuated, and so forth. For each feature selected, a corresponding one or more of the actuators 520 may be actuated to provide localized tactile feedback or to provide tactile feedback that varies in intensity such that the intensity is greatest at an area on the portable electronic device that is associated with the selected feature.

Alternatively, tactile feedback may be provided by actuating the actuators in an order to indicate a direction. For example, the actuators may be actuated in succession from bottom to top of the portable electronic device.

Tactile feedback may be provided based on the type of input. For example, information displayed may be scrolled when a contactless gesture associated with scrolling is detected or identified. For example, the object may be detected drawing a line that moves up or down to provide a scrolling input in that direction. The tactile feedback that is provided may be directional, e.g., in succession, to indicate a scrolling direction or may provide a clicking sensation during scrolling of information. For example, one row of actuators may be actuated, followed by the next row of actuators in the direction of scrolling until each row is actuated. The process may be repeated. Alternatively, alternating rows may be actuated. Alternatively, columns may be actuated in a column-by-column order to provide feedback in those directions. Other feedback, e.g., diagonal, circular, and so forth, may be provided. Tactile feedback may also be provided based on the location of the object and the intensity of the tactile feedback may be varied based on the distance of the object from the display such that the intensity of tactile feedback increases with decreasing distance from the display. Ultrasonic tactile feedback may also be provided. For example, the ultrasonic tactile feedback may mimic the shape of the gesture, such as a poke, a swipe, an in-and-out gesture, and so forth. Alternatively bumps, grooves, roughness, smoothness, and other sensations may be provided by ultrasonic tactile feedback. The tactile feedback is provided via the housing of the electronic device and the housing may be any suitable material to facilitate transfer of tactile feedback to a user.

Tactile feedback may be provided when selection of a selectable feature is performed by an object that does not contact the portable electronic device 100. Tactile feedback may therefore be provided although the object is spaced from the portable electronic device 100 and contact is not made by the object with the portable electronic device. The tactile feedback provides confirmation of selection to the user. Confirmation is provided, for example, that the object is associated with the displayed feature of the stereoscopic image. Such confirmation of selection may reduce errors caused, for example, by double selection, which may reduce device use time and power requirements.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
displaying a projected image utilizing a display of a portable electronic device;
detecting an object near the portable electronic device;
when the object is associated with the projected image, actuating an actuator to provide tactile feedback.

2. The method according to claim 1, wherein detecting an object comprises detecting motion of the object.

3. The method according to claim 1, wherein the object is associated with the projected image when the object is located in a region in which a selectable feature is displayed.

4. The method according to claim 1, wherein providing tactile feedback comprises actuating an actuator to provide tactile feedback via a housing of the portable electronic device.

5. The method according to claim 1, comprising identifying one actuator of a plurality of actuators.

6. The method according to claim 1, comprising identifying one actuator of a plurality of actuators based on location of the selectable feature.

7. A computer-readable medium having computer-readable code executable by at least one processor of the portable electronic device to perform the method of claim 1.

8. A portable electronic device comprising:
a display to project an image in a region spaced from the portable electronic device;
an object detector to detect an object in the region spaced from the portable electronic device;
an actuator actuatable to provide tactile feedback;
a processor coupled to the display, the detector, and the actuator, to actuate the actuator in response to detection of the object in the region spaced from the portable electronic device.

9. The portable electronic device according to claim 8, wherein the image projected includes a selectable feature and wherein the actuator is actuated in response to detection of the object on the selectable feature.

10. The portable electronic device according to claim 8, wherein the object detector detects motion of the object.

11. The portable electronic device according to claim 8, wherein the image projected includes a selectable feature and the actuator is actuated in response to detection of a pressing motion by the object on the selectable feature.

12. The portable electronic device according to claim 8, wherein the actuator provides tactile feedback via a housing of the portable electronic device.

13. The portable electronic device according to claim 8, comprising a plurality of actuators including the actuator, and wherein the processor identifies the actuator based on the location of the object within the region, prior to actuating the actuator.

14. The portable electronic device according to claim 8 or the method according to claim 1, wherein a plurality of actuators are actuated in an order when a scrolling gesture is detected.

15. The portable electronic device according to claim 8 or the method according to claim 1, wherein the actuator is actuated to provide an intensity of tactile feedback that is based on a distance of the object from the display.

## Amended claims

### Amended claims in accordance with Rule 137(2) EPC.

**1.** A method comprising:
projecting an image utilizing a display (112) of a portable electronic device (100);
detecting a gesture performed by an object in a region spaced from the portable electronic device (100);
when the object is associated with the projected image, actuating an actuator (120) to provide tactile feedback based on the gesture.

**2.** The method according to claim 1, wherein detecting an object comprises detecting motion of the object.

**3.** The method according to claim 1, wherein the object is associated with the projected image when the object is located in a region in which a selectable feature is projected.

**4.** The method according to claim 1, wherein providing tactile feedback comprises actuating an actuator (120) to provide tactile feedback via a housing of the portable electronic device (100).

**5.** The method according to claim 1, comprising identifying one actuator (120) of a plurality of actuators (120).

**6.** The method according to claim 1, comprising identifying one actuator (120) of a plurality of actuators based on location of a selectable feature (120).

**7.** A computer-readable medium (110) having computer-readable code executable by at least one processor (102) of the portable electronic device (100) to perform the method of any of claims 1 to 7.

**8.** A portable electronic device (100) comprising:
a display (112) to project an image in a region spaced from the portable electronic device (100);
an object detector (116) to detect a gesture performed by an object in the region spaced from the portable electronic device (100);
an actuator (120) actuatable to provide tactile feedback;
a processor (102) coupled to the display, the detector, and the actuator, to actuate the actuator in response to detection of the gesture performed by the object in the region spaced from the portable electronic device.

**9.** The portable electronic device (100) according to claim 8, wherein the image projected includes a selectable feature and wherein the actuator (102) is actuated in response to detection of the object on the selectable feature.

**10.** The portable electronic device according to claim 8, wherein the object detector detects motion of the object.

**11.** The portable electronic device (100) according to claim 8, wherein the image projected includes a selectable feature and the actuator (102) is actuated in response to detection of a pressing motion by the object on the selectable feature.

**12.** The portable electronic device according to claim 8, wherein the actuator provides tactile feedback via a housing of the portable electronic device.

**13.** The portable electronic device (100) according to claim 8, comprising a plurality of actuators (102) including the actuator (102), and wherein the processor (102) identifies the actuator based on the location of the object within the region, prior to actuating the actuator (102).

**14.** The portable electronic device (100) according to claim 8, wherein a plurality of actuators (102) are actuated in an order when a scrolling gesture is detected.

**15.** The portable electronic device (100) according to claim 8, wherein the actuator (102) is actuated to provide an intensity of tactile feedback that is based on a distance of the object from the display (112).
